# EUROPEAN PATENT SPECIFICATION

(11) **EP 2 944 409 B1**
(45) Date of publication and mention of the grant of the patent: **02.11.2016**
(21) Application number: 15166072.7
(22) Date of filing: 30.04.2015
(51) Int. Cl.: B23D 47/04, B23D 59/00, B23Q 11/00, B27B 5/065

(54) **MACHINE FOR CUTTING WOOD OR PLASTIC PANELS**
VORRICHTUNG ZUM SCHNEIDEN VON HOLZ- ODER KUNSTSTOFFSCHEIBEN
MACHINE POUR LA COUPE DE PANNEAUX EN BOIS OU EN PLASTIQUE

(30) Priority: 30.04.2014 IT BO20140251
(43) Date of publication of application: 18.11.2015
(73) Proprietor: BIESSE S.p.A., 61100 Pesaro (IT)
(72) Inventor: Lattanzi, Lorenzo, 61100 PESARO (IT)
(74) Representative: Manconi, Stefano

(56) References cited:
- DE-A1-102007 023 664
- DE-A1-102009 018 498
- DE-B3-102007 021 410
- DE-U1-202011 102 022

## Description

The present invention relates to a machine for cutting wood or plastic panels.

In the field of processing wood or plastic panels, it is known to provide a cutting machine comprising a supporting surface for the panels; a cutting station; a feeding device to feed the panels through the cutting station in a first direction; and a cutting device, which is mounted in the cutting station so as to move along a cutting plane, which is perpendicular to the first direction, and cut the panels in a second direction, which is transverse to the first direction.

The cutting machine further comprises a pressing device mounted in the cutting station to move in a third direction orthogonal to the aforementioned first and second directions between a locking position of the panels against the supporting surface and a releasing position.

The pressing device comprises two plates, which extend in the second direction, are perpendicular to the first direction and are mounted on opposite sides of the cutting plane in the first direction itself.

The two plates are mutually integral to move in the third direction with respective mutually identical laws of motion and mutually delimit an inner cavity connected to a pneumatic suction device.

Each plate is delimited in the first direction by an inner face facing towards the cutting plane and by an outer face opposite to the inner face itself.

Such a machine is generally known from DE102009018498A1.

The processing powders and/or shavings generated by the cutting device, in particular while cutting the head and tail of the panels, are removed from the supporting surface by means of a blowing device comprising a plurality of blowing nozzles distributed on the outer face of at least one plate of the pressing device.

The panel cutting machines of the known type described above have several drawbacks mainly deriving from the fact that the blowing nozzles mounted on the outer face of at least one plate of the pressing device have relatively low efficacy, in addition to dispersing the processing powders and/or the shavings into the outer environment, jeopardizing both the health of personnel and the correct operation of the cutting machine.

It is the object of the present invention to provide a machine for cutting wood or plastic panels, which is free from the above-described drawbacks, and which is simple and cost-effective to implement.

According to the present invention, there is provided a machine for cutting wood or plastic panels as disclosed in the appended claims.

The present invention will now be described with reference to the accompanying drawings, which show a non-limitative embodiment thereof, in which:
figure 1 is a diagrammatic plan view, with parts removed for clarity, of a preferred embodiment of the cutting machine of the present invention;
figure 2 is a diagrammatic side view, with parts removed for clarity, of the cutting machine in figure 1;
figure 3 is a diagrammatic perspective view of a detail of the cutting machine in figures 1 and 2; and
figure 4 is a diagrammatic side view, with parts removed for clarity of a variant of the cutting machine in figures 1 and 2.

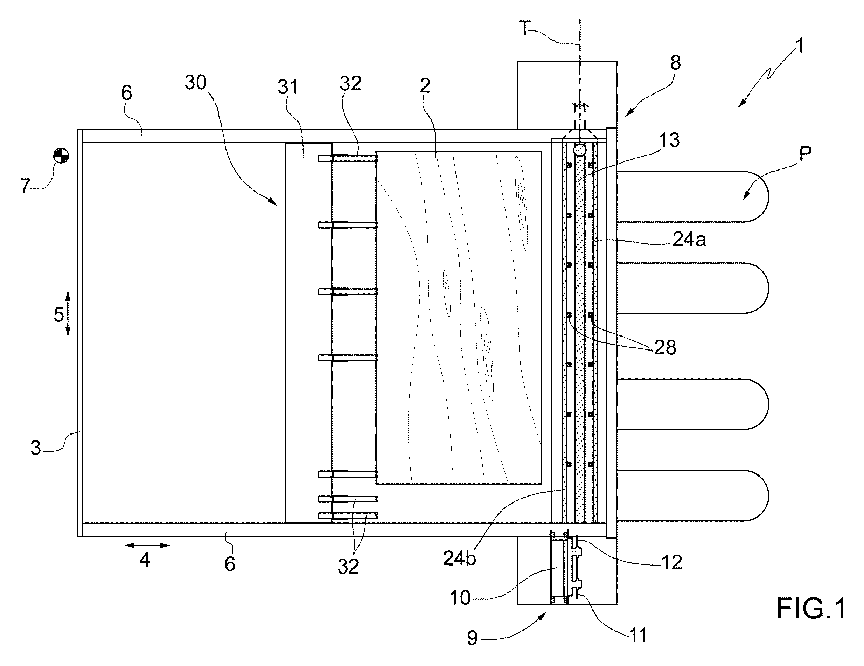

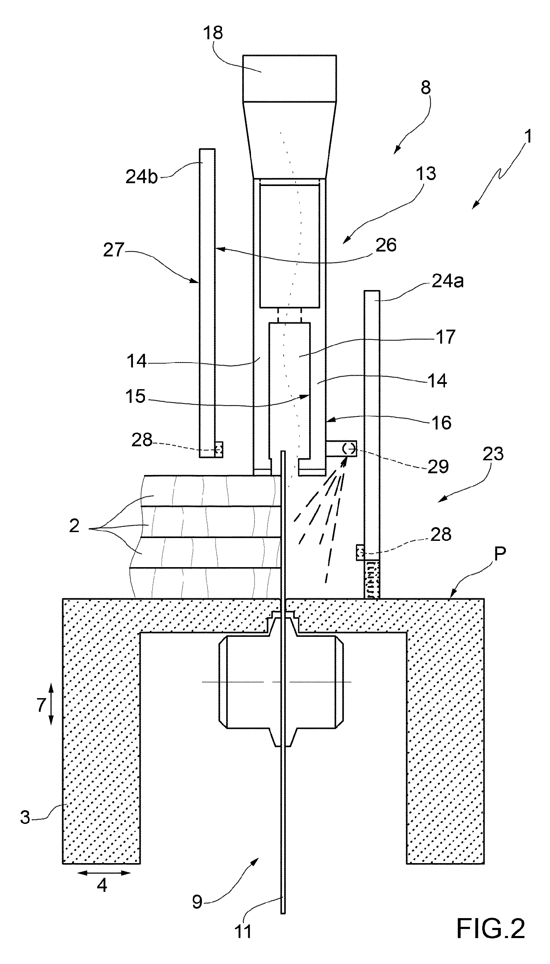

With reference to figures 1 and 2, reference numeral 1 indicates as a whole a cutting machine for cutting wood or plastic panels 2 of substantially rectangular shape.

The machine 1 comprises a support frame 3, which has a substantially elongated rectangular shape in plan view, extends in a horizontal direction 4, and is delimited by two guiding longitudinal members 6 parallel to each other and to direction 4 itself in a horizontal direction 5 transverse to direction 4.

The frame 3 defines a supporting surface P for the panels 2, which is substantially horizontal and perpendicular to a vertical direction 7 orthogonal to directions 4 and 5.

The machine 1 further comprises a cutting station 8, which is obtained along the frame 3, and is provided with a cutting device 9 comprising a motorized carriage 10 coupled in known manner to the frame 3 to perform rectilinear movements in direction 5 with respect to the frame 3 itself under the thrust of a drive device (known and not shown).

The carriage 10 supports a blade 11 and an engraver 12 mounted to turn about respective longitudinal axes parallel to each other and to direction 4 and to perform rectilinear movements in direction 7 between respective lowered resting positions, in which the blade 11 and the engraver 12 are arranged under the surface P to allow the feeding of the panels 2 along the surface P, and respective raised operating positions, in which the blade 11 and the engraver 12 protrude through the frame 3 over the surface P itself to cut the panels 2.

Furthermore, the blade 11 and the engraver 12 are moved by the carriage 10 along a cutting plane T perpendicular to direction 4 with a reciprocating rectilinear motion comprising an outward stroke, in which the engraver 12, arranged in front of the blade 11 in feeding direction 5 of the carriage 10, engraves the panel 2 arranged on surface P and the blade 11 cuts the panels 2, and a return stroke.

The device 9 cooperates with a pressing device 13 comprising two plates 14, which extend over the surface P in direction 5, are perpendicular to direction 4, and are arranged on opposite sides of the plane T in direction 4 itself.

Each plate 14 is delimited in direction 4 by an inner face 15 facing towards the plane T and by an outer face 16 opposite to the inner face 15 itself.

The two plates 14 are coupled in sliding manner to the frame 3 to perform rectilinear movements in direction 7 with respect to the frame 3 and under the bias of an actuating device (known and not shown).

The two plates 14 are integral to each other and are moved in direction 7 with respective mutually identical laws of motion between a lowered operating position, in which the panels 2 are blocked on the surface P and cut by the device 9 parallel to direction 5, and a raised resting position.

The device 13 further comprises an inner cavity 17, which is delimited in direction 4 by the plates 14, and is connected with a pneumatic suction device 18 of known type.

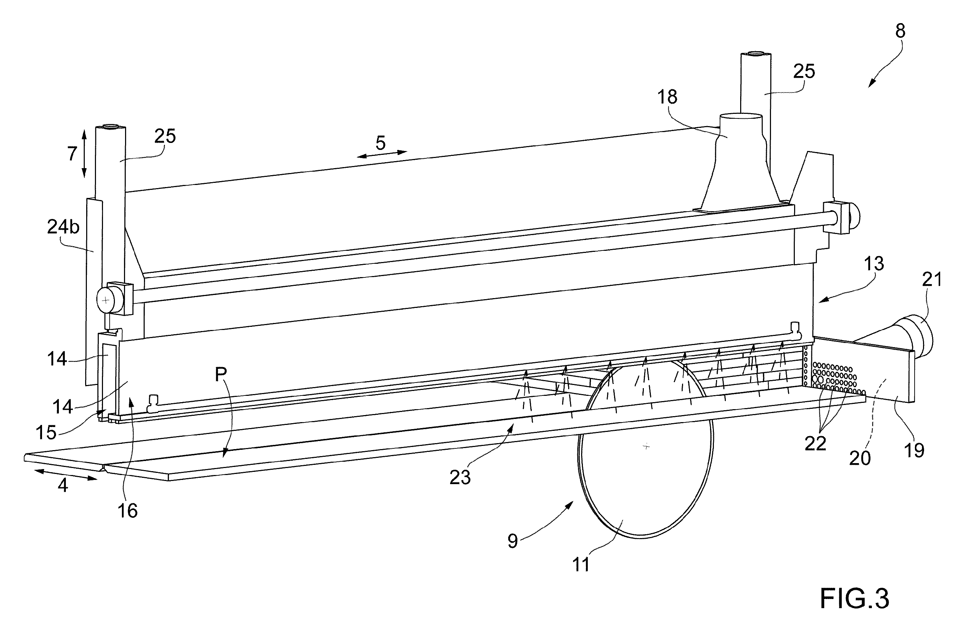

As shown in figure 3, station 8 is further provided with a limit stop block 19, which extends in direction 4, and is mounted on the side of the surface P to allow a correct positioning of the panels 2 in direction 5.

The block 19 has an inner chamber 20, which is connected to a pneumatic suction device 21 and communicates with the external environment through a plurality of suction holes 22 through the block 19.

With reference to figures 1 and 2, the cutting device 9 and the pressing device 13 cooperate with a blowing device 23 configured to remove the processing powders and/or shavings generated by the device 9 itself from the surface P.

In the case in point, the device 23 comprises two retaining walls 24 which extend in direction 5, are perpendicular to direction 4, and are mounted on opposite sides of the plates 14 of the device 13 in direction 4 itself.

Each wall 24 is coupled in sliding manner to the frame 3 to move in direction 7, with respect to the frame 3 and under the thrust of a pair of actuator cylinders 25, independently from the plates 14 and from the other wall 24, between a lowered operating position, in which the wall 24 is arranged in contact with the surface P, and a raised resting position.

Each wall 24 is delimited in direction 4 by an inner face 26 facing towards the plane T and by an outer face 27 opposite to the inner face 26 itself.

Each wall 24 is further provided with a plurality of blowing nozzles 28, which are distributed along the inner face 26 in direction 5, and are oriented so as to blow the processing powders and/or the shavings into the chamber 20 through the holes 22.

In other words, the nozzles 28 are mounted along the inner faces 26 of the walls 24 so as to generate a flow of air substantially parallel to the surface P and parallel to direction 5.

As shown in figures 2 and 3, the device 23 further comprises a plurality of blowing nozzles 29, which are distributed along the outer face 16 of the plate 14 arranged downstream of the station 8, and are oriented so as to blow the processing powders and/or shavings into the cavity 17.

The machine 1 further comprises a gripping and conveying unit 30 to feed the panels 2 along the surface P and through the station 8 in both senses of direction 4.

The unit 30 comprises a motorized supporting crossmember 31, which extends between the two longitudinal members 6 in direction 5, is coupled in sliding manner to the two longitudinal members 6 to perform rectilinear displacements in direction 4 with respect to the longitudinal members 6 themselves and under the bias of an actuating device (known and not shown), and supports a plurality of gripping members 32 distributed along the crossmember 31 in direction 5.

Each member 32 is mobile, with respect to the crossmember 31, between a raised resting position and a lowered operating position and is defined by a clamp comprising two jaws mutually mobile between a locking position and a releasing position of at least one panel 2.

With reference to figure 2, in order to cut the head of the panels 2, the pressing device 13 is moved to its lowered operating position to lock the panels 2 on the surface P and the wall 24 (hereinafter indicated by reference numeral 24a) arranged downstream of the station 8 is moved to its lowered operating position to contain the processing powders and/or shavings.

During and/or at the end of the cutting of the head of the panels 2, the nozzles 28 are activated to blow the powders and/or shavings on the surface P in the chamber 20 and, thus, in the pneumatic suction device 21 and/or the nozzles 29 to blow the processing powders and/or shavings on the surface P in the cavity 17, and thus in the pneumatic suction device 18.

An operating sequence entirely similar to the one described above is activated to cut the tail of the panels 2 using the wall 24 (hereinafter indicated by 24b) arranged upstream of the station 8 and the respective nozzles 28 instead of the wall 24a and the respective nozzles 28.

According to some variants (not shown):
each plurality of nozzles 28, 29 is eliminated and replaced by a continuous slit parallel to direction 5;
the nozzles 29 are also mounted on the outer face 16 of the plate 14 arranged upstream of the station 8;
the nozzles 29 are also mounted on the inner face 15 of the plates 14 to remove the processing powders and/or shavings present on the panels 2 during the intermediate cuts of the panels 2 themselves; and
the walls 24a, 24b are eliminated and replaced by respective walls defined by pivoting wings mounted over the surface P in direction 5.

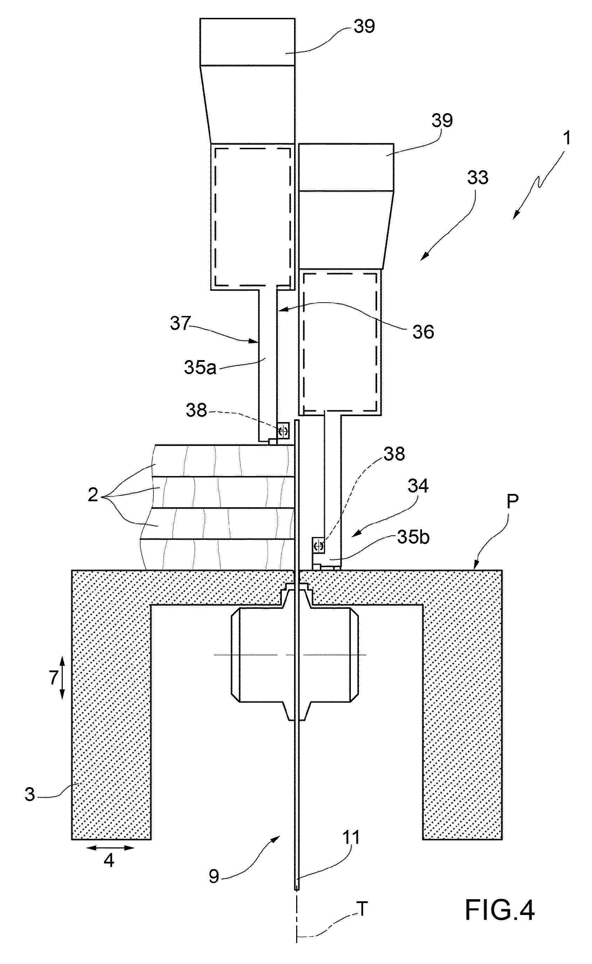

The variant illustrated in figure 4 differs from that shown in figures from 1 to 3 only in that in this variant the pressing device 13 and the blowing device 23 are eliminated and replaced by a pressing device 33 and a blowing device 34, respectively.

The device 33 comprises two plates 35, which extend over the surface P in direction 5, are perpendicular to direction 4, and are arranged on opposite sides of the plane T in direction 4 itself.

Each plate 35 is delimited in direction 4 by an inner face 36 facing towards the plane T and by an outer face 37 opposite to the inner face 36 itself.

The two plates 35 are coupled in sliding manner to the frame 3 to perform rectilinear movements in direction 7 with respect to the frame 3 and under the bias of respective actuating devices (known and not shown).

The two plates 35 are mutually independent from each other to move in direction 7 with respective, mutually independent laws of motion.

The device 34 comprises, for each plate 35, a respective plurality of blowing nozzles 38, which are distributed along the inner face 36 of the plate 35 in direction 5, and are oriented so as to blow the processing powders and/or shavings at the inlet of the intake holes 22 of the block 19 and/or into a suction hood 39 mounted over the plate 35 and integral with the plate 35 itself.

According to a variant (not shown), the blowing device 23 may also be auxiliary to the blowing device 34.

In order to cut the head of the panels 2, the plate 35 (hereinafter indicated by reference numeral 35a) arranged upstream of the station 8 is moved to a lowered operating position in contact with the panels 2 and the plate 35 (hereinafter indicated by reference numeral 35b) arranged downstream of the station 8 is moved to a lowered operating position in contact with the surface P to contain the processing powders and/or shavings.

During and/or at the end of the cutting of the head of the panels 2, the nozzles 38 of the plate 35b are activated to blow the processing powders and/or shavings present on the surface P in the chamber 20 and, thus, in the pneumatic suction device 21 and/or into the respective hood 39.

In order to cut the tail of the panels 2, an operating sequence entirely similar to the one described above is activated using the plate 35a and the respective nozzles 38 instead of the plate 35b and of the respective nozzles 38.

For performing the intermediate cuts of the panels 2, the two plates 35a, 35b are moved into contact with the panels 2, and the respective nozzles 38 are activated to blow the processing powders and/or shavings present on the panels 2 themselves into the chamber 20, and thus into the pneumatic suction device 21 and/or into the respective hood 39.

With regards to the above, it is worth specifying that the air fed through the blowing nozzles 28, 29, 38 is ionized by means of a ionizing device (known and not shown), in particular when the panels 2 are made of plastic material.

## Claims

1. A machine for cutting wood or plastic panels (2), the machine comprising a supporting surface (P) for the panels (2); a cutting station (8); a feeding device (30) to feed the panels (2) through the cutting station (8) in a first direction (4); a cutting device (9), mounted in the cutting station (8) to move along a cutting plane (T), perpendicular to the first direction (4), and to cut the panels (2) in a second direction (5), transverse to the first direction (4) itself; a pressing device (33), which is mounted in the cutting station (8) so as to move in a third direction (7), which is orthogonal to said first and second directions (4, 5), between a locking position of the panels (2) against the supporting surface (P), and a releasing position, and comprises, in turn, two plates (35), mounted on opposite sides of the cutting plane (T) in the first direction (4), each plate (35) being delimited, in the first direction (4), by an inner face (36) facing the cutting plane (T) and by an outer face (37), which is opposite to the inner face (36) itself; and a blowing device (23, 34) for removing processing powders and/or shavings generated by the cutting device (9) from the supporting surface (P) and/or from the panels (2); and being **characterized in that** the blowing device (23, 34) comprises blowing means (38), distributed along the inner face (36) of at least one plate (35).

2. A machine according to claim 1 and further comprising a limit stop member (19), mounted on the side of the supporting surface (P) at the cutting station (8) to allow the panels (2) to be correctly positioned in the second direction (5).

3. A machine according to claim 2, wherein the limit stop member (19) has an inner chamber (20), which is connected to a pneumatic suction device (21) and communicates with the outside through a plurality of suction holes (22); the blowing means (38) being oriented so as to lead processing powders and/or shavings to the inner chamber (20) through the suction holes (22).

4. A machine according to any of the previous claims and comprising, for each plate (35), a respective suction hood (39), which is fixed to the plate (35) above the plate (35) itself; the blowing means (38) being oriented so as to lead processing powders and/or shavings into the suction hood (39).

5. A machine according to any of the previous claims, wherein the blowing means (38) comprise a plurality of blowing nozzles or a blowing slit.

6. A machine according to any of the previous claims, wherein the two plates (35) are integral to one another and are mobile in the third direction (7) with respective mutually identical laws of motion.

7. A machine according to any of the claims from 1 to 5, wherein the two plates (35) are mobile in the third direction (7) with respective mutually independent laws of motion.

8. A machine according to any of the previous claims, wherein the blowing device (23, 34) further comprises at least one retaining wall (24a, 24b), which is mounted on the outside of the plates (35) of the pressing device (33), extends above the supporting surface (P) in the second direction (5), is delimited by an inner face (26) facing the cutting plane (T), and is provided with further blowing means (28), distributed along the inner face (26) in the second direction (5).

9. A machine according to claim 8, wherein the blowing device (23, 34) comprises two retaining walls (24a, 24b), arranged on opposite sides of the plates (35) of the pressing device (33) in the first direction (4).

10. A machine according to claim 8 or 9, wherein each retaining wall (24a, 24b) is mobile in the third direction (7) between a lowered operating position, in which the retaining wall (24a, 24b) comes into contact with the supporting surface (P), and a raised resting position.

11. A machine according to any of the previous claims and further comprising an ionizer device to ionize the air fed through said blowing means (38) and/or further blowing means (28).

## Patentansprüche

1. Maschine zum Schneiden von Holz-oder Kunststofftafeln (2), umfassend eine Tragfläche (P) für die Tafeln (2), eine Schneidstation (8), eine Fördereinrichtung (30) zum Fördern der Tafeln (2) durch die Schneidstation (8) in einer ersten Richtung (4), eine Schneideinrichtung (9), montiert in der Schneidstation (8), zum Bewegen entlang einer Schneidebene (T) senkrecht zur ersten Richtung (4) und zum Schneiden der Tafeln (2) in einer zweiten Richtung (5) quer zur ersten Richtung (4), eine Presseinrichtung (33), die in der Schneidstation (8) montiert ist, um sich in einer dritten Richtung (7) zu bewegen, rechtwinklig zur ersten und zweiten Richtung (4,5), zwischen einer Verriegelungsposition der Tafeln (2) an der Tragfläche (P) und einer Freigabeposition, ihrerseits umfassend zwei Platten (35), montiert auf einander gegenüberliegenden Seiten der Schneidebene (T) in der ersten Richtung (4), wobei jede Platte (35) in der ersten Richtung (4) durch eine Innenfläche (36) begrenzt ist, die der Schneidebene (T) zugewandt ist, und durch eine Außenfläche (37), die der Innenfläche (36) gegenüberliegt, und eine Blaseinrichtung, (23,34) zum Entfernen von mehlförmigem Abfall und/oder Spänen, erzeugt durch die Schneideinrichtung (9) von der Tragfläche (P) und/oder von den Tafeln (2), **dadurch gekennzeichnet, dass** die Blaseinrichtung (23,34) Blasmittel (38) umfasst, verteilt entlang der Innenfläche (36) der wenigstens einen Platte (35).

2. Maschine nach Anspruch 1, weiterhin umfassend einen Anschlag (19), montiert auf der Seite der Tragfläche (P) an der Schneidstation (8) um den Tafeln (2) ein genaues positionieren in der zweiten Richtung (5) zu erlauben.

3. Maschine nach Anspruch 2, wobei der Anschlag (19) eine Innenkammer (20) aufweist, die an eine pneumatische Saugeinrichtung (21) montiert ist und mit der Umgebung Mehrzahl von Saugbohrung (22) kommuniziert, wobei die Blasmittel (38) derart ausgerichtet sind, dass sie Arbeitspulver und/oder Späne zur Innenkammer (20) durch die Saugbohrung (22) führen.

4. Maschine nach einem der vorausgegangenen Ansprüche, umfassend für jede Platte (35) eine jeweilige Saughaube (39), die an der Platte (35) oberhalb dieser fixiert ist, wobei die Blasmittel (38) derart ausgerichtet sind, dass sie mehlförmigen Abfall und/oder Späne in die Saughaube (39) führen.

5. Maschine nach einem der vorausgegangenen Ansprüche, wobei die Blasmittel (38) eine Mehrzahl von Blasdüsen und/oder einen Blasschlitz umfassen.

6. Maschine nach einem der vorausgegangen Ansprüche, wobei die beiden Platten (35) miteinander einteilig und in der dritten Richtung (7) in Bezug auf entsprechende gegenseitige identische Bewegungsgesetze beweglich sind.

7. Maschine nach einem der Ansprüche 1 bis 5, wobei die beiden Platten (35) in der dritten Richtung in Bezug auf jeweilige voneinander unabhängige Bewegungsgesetze beweglich sind.

8. Maschine nach einem der vorausgegangenen Ansprüche, wobei die Blaseinrichtung (23, 34) weiterhin wenigstens eine Haltewand (24a, 24b) umfasst, die an der Außenseite der Platten (35) der Presseinrichtung (33) montiert ist, sich über der Tragfläche (P) in der zweiten Richtung (5) erstreckt, begrenzt ist von einer Innenfläche (26), die der Schneidebene (T) zugewandt ist und die versehen ist mit weiteren Blasmitteln (28), verteilt entlang der Innenfläche (26) in der zweiten Richtung (5).

9. Maschine nach Anspruch 8, wobei die Blaseinrichtung (23, 34) zwei Haltewände (24a, 24b) umfasst, angeordnet aufeinander gegenüberliegenden Seiten der Platten (35) der Presseinrichtung (33) in der ersten Richtung (4).

10. Maschine nach den Ansprüche 8 oder 9, wobei jede Haltewand (24a, 24b) in der dritten Richtung (7) beweglich ist zwischen einer abgesenkten Arbeitsposition, in der die Haltewand (24a, 24b) in Kontakt gelangt mit der Tragfläche (P) und einer angehobenen Ruheposition.

11. Maschine nach einem der vorausgegangenen Ansprüche, weiterhin umfassend eine Ionisiereinrichtung zum Ionisieren der Luft, die durch die Blasmittel (38) und/oder weitere Blasmittel (28) gefördert wird.

## Revendications

1. Machine pour la coupe de panneaux en bois ou plastique (2), la machine comprenant une surface de support (P) pour les panneaux (2) ; une station de coupe (8) ; un dispositif d'amenée (30) pour amener les panneaux (2) par la station de coupe (8) dans une première direction (4) ; un dispositif de coupe (9) monté dans la station de coupe (8) pour se déplacer le long d'un plan de coupe (T), perpendiculairement à la première direction (4), et pour couper les panneaux (2) dans une deuxième direction (5), transversalement à la première direction (4) elle-même ; un dispositif de pressage (33) qui est monté dans la station de coupe (8) de sorte à se déplacer dans une troisième direction (7) qui est orthogonale auxdites première et deuxième directions (4, 5) entre une position de verrouillage des panneaux (2) contre la surface de support (P), et une position de libération et comprend à son tour deux plaques (35) montées sur des côtés en regard du plan de coupe (T) dans la première direction (4), chaque plaque (35) étant délimitée dans la première direction (4) par une face intérieure (36) faisant face au plan de coupe (T) et par une face extérieure (37) qui est en regard de la face intérieure (36) elle-même ; et un dispositif de soufflage (23, 34) pour retirer les poudres de traitement et/ou copeaux générés par le dispositif de coupe (9) de la surface de support (P) et/ou des panneaux (2) ; et étant **caractérisée en ce que** le dispositif de soufflage (23, 34) comprend des moyens de soufflage (38) distribués le long de la face intérieure (36) d'au moins une plaque (35).

2. Machine selon la revendication 1 et comprenant en outre un élément de butée limite (19) monté sur le côté de la surface de support (P) sur la station de coupe (8) pour permettre aux panneaux (2) d'être correctement positionnés dans la deuxième direction (5).

3. Machine selon la revendication 2, dans laquelle l'élément de butée limite (19) a une chambre intérieure (20) qui est reliée à un dispositif d'aspiration pneumatique (21) et communique avec le côté extérieur par une pluralité de trous d'aspiration (22) ; les moyens de soufflage (38) étant orientés de sorte à mener des poudres de traitement et/ou copeaux à la chambre intérieure (20) par les trous d'aspiration (22).

4. Machine selon l'une quelconque des revendications précédentes et comprenant pour chaque plaque (35) une hotte aspirante respective (39) qui est fixée à la plaque (35) au-dessus de la plaque (35) elle-même ; les moyens de soufflage (38) étant orientés de sorte à mener des poudres de traitement et/ou copeaux dans la hotte aspirante (39).

5. Machine selon l'une quelconque des revendications précédentes, dans laquelle les moyens de soufflage (38) comprennent une pluralité de buses de soufflage ou une fente de soufflage.

6. Machine selon l'une quelconque des revendications précédentes, dans laquelle les deux plaques (35) sont formées d'un seul tenant l'une à l'autre et sont mobiles dans la troisième direction (7) avec des lois de mouvement mutuellement identiques respectives.

7. Machine selon l'une quelconque des revendications 1 à 5, dans laquelle les deux plaques (35) sont mobiles dans la troisième direction (7) avec des lois de mouvement mutuellement indépendantes respectives.

8. Machine selon l'une quelconque des revendications précédentes, dans laquelle le dispositif de soufflage (23, 34) comprend en outre au moins une paroi de retenue (24a, 24b) qui est montée sur le côté extérieur des plaques (35) du dispositif de pressage (33), s'étend au-dessus de la surface de support (P) dans la deuxième direction (5), est délimitée par une face intérieure (26) faisant face au plan de coupe (T), et est doté de moyens de soufflage supplémentaires (28) distribués le long de la face intérieure (26) dans la deuxième direction.

9. Machine selon la revendication 8, dans laquelle le dispositif de soufflage (23, 34) comprend deux parois de retenue (24a, 24b) agencées sur des côtés en regard des plaques (35) du dispositif de pressage (33) dans la première direction (4).

10. Machine selon la revendication 8 ou 9, dans laquelle chaque paroi de retenue (24a, 24b) est mobile dans la troisième direction (7) entre une position de fonctionnement abaissée, dans laquelle la paroi de retenue (24a, 24b) vient en contact avec la surface de support (P) et une position de repos relevée.

11. Machine selon l'une quelconque des revendications précédentes et comprenant en outre un dispositif ioniseur pour ioniser l'air amené par lesdits moyens de soufflage (38) et/ou moyens de soufflage supplémentaires (28).
